# EUROPEAN PATENT APPLICATION

(11) **EP 4 512 272 A1**
(43) Date of publication of application: **26.02.2025**
(21) Application number: 23791742.2
(22) Date of filing: 11.04.2023
(51) Int. Cl.: A44B 11/25, A44B 11/26, B60R 22/26, B60R 22/48

(54) **BUCKLE AND SEAT BELT DEVICE PROVIDED WITH SAME**

(30) Priority: 20.04.2022 JP 2022069549
(71) Applicant: Autoliv Development AB, 44783 Vargarda (SE)
(72) Inventor: ISHIGAKI, Ryo, Yokohama-shi, Kanagawa 222-8580 (JP)
(74) Representative: Müller Verweyen
(86) International application number: PCT/JP2023/014643
(87) International publication number: WO 2023/204094

(57) **Abstract**

To simplify the work for assembling a harness and improve the durability of a harness when a buckle swings. To achieve this, the present disclosure provides a buckle (10) with a base end part (10b) side that is attached so as to be movable relative to a bracket (80) that constitutes a seat belt device for a vehicle. The buckle (10) has a cover member that constitutes a wall of the buckle (10), a detection member (22) arranged within the cover member for detecting whether the buckle (10) is in a prescribed state, a harness (30) for sending a signal detected by the detection member (22) to a vehicle side, and a harness holder (40) that limits the movable range of the harness (30) within the cover member and guides the harness (30) while providing sufficient play to allow at least a part of the harness (30) to move relative to the cover member when the buckle (10) moves relative to the bracket (80).

## Description

### TECHNICAL FIELD

The present invention relates to a buckle and a seat belt device equipped with the same.

### BACKGROUND ART

A vehicle seat belt device with a switch for sensing the state of the device and a harness for transmitting a signal from the switch built into the buckle is used. This manner of switch includes, for example, a slide switch or a Hall Effect switch that detects whether the tongue of the seatbelt is engaged with the buckle, and the harness is configured to send a signal detected by this manner of switch to a control device (such as a CPU) of the vehicle (see, for example, Patent Documents 1 to 4).

When attaching this manner of harness to the buckle of a seatbelt device, a method that has traditionally been used is to form ribs on members such as the buckle cover or holder, and then sandwich one or more harnesses between the ribs to fix them in place. Furthermore, if hook-shaped claws are provided on each rib to prevent the harness from coming off, the harness may need to be further pushed in until these claws are reached.

### RELATED ART DOCUMENTS

### PATENT DOCUMENTS

Patent Document 1: Japanese Unexamined Patent Application 2004-49358
Patent Document 2: Japanese Unexamined Patent Application 2004-135779
Patent Document 3: Japanese Unexamined Patent Application 2004-121602
Patent Document 4: Japanese Unexamined Patent Application 2003-81057

### SUMMARY OF THE INVENTION

### PROBLEM TO BE SOLVED BY THE INVENTION

However, the assembly process of clamping and fastening each harness one by one in narrow spaces such as between ribs and then routing around requires a considerable amount of time and effort. In addition, in recent years, seat belt devices have been used that have a swiveling motion, in which the buckle tilts in the direction of travel and width of the vehicle. However, when the buckle repeatedly swivels in this manner, the harness that is routed inside the buckle also repeatedly bends, causing a problem that durability is reduced.

Therefore, an object of the present invention is to provide a buckle having a structure that can simplify the work of assembling the harness and improve the durability of the harness when the buckle swivels, and a seat belt device equipped with the same.

### MEANS FOR SOLVING THE PROBLEM

An aspect of the present invention is a buckle with a base end part attached to a bracket constituting a seatbelt device for a vehicle so as to be movable relative thereto, comprising:
a cover member constituting a wall part of the buckle;
a detection member arranged inside the cover member for detecting whether or not the buckle is in a prescribed state;
a harness for sending the signal detected by the detection member to the vehicle side; and
a harness holder that limits the movable range of the harness in the cover member and guides the harness while providing sufficient play to allow at least a part of the harness to move relative to the cover member when the buckle moves relative to the bracket.

In a buckle configured as described above having a harness holder that guides the harness, the harnesses can easily be routed through the buckle all at once, for example, by bundling the harnesses together and guiding them through the harness holder. Furthermore, since the harness holder also limits the range of movement of the harness within the cover member, it is easy to prevent the harness from being accidentally caught when, for example, assembling the cover member to the buckle. In addition, in a buckle configured as described above, when the buckle moves relative to the bracket, the harness holder guides the harness while allowing some play so that at least a part of the harness moves relative to the cover member, thereby improving the durability of the harness when the buckle swivels.

With the buckle configured as described above, the harness holder may include a guide part on the harness part way from the base end part of the buckle toward a tip end part for guiding into the detection member.

With the buckle configured as described above, in the path of the harness from the bracket to the detection member, the guide part may only be provided on the portion that guides the harness into the detection member.

With the buckle configured as described above, the guide part may be composed of a cylindrical surface or an approximately equivalent curved surface.

With the buckle configured as described above, the harness holder may include a fall-out prevention part for preventing the harness from falling out of the guide part.

With the buckle configured as described above, the fall-out prevention part may be formed with a shape and size sufficient to prevent the harness from falling out of the guide part when the harness is bent the most as a result of the buckle moving relative to the bracket.

The buckle configured as described above may be movable in the width direction of the vehicle relative to the bracket.

The buckle configured as described above may further include a restraining part that restrains the harness holder, which is detachable from the buckle, from lifting up.

The buckle configured as described above may be movable in the front-to-back direction of the vehicle relative to the bracket.

The buckle configured as described above may further include a rotation preventing part for preventing the harness holder that is detachable relative to the buckle from rotating relative to the buckle in the front-to-back direction of the vehicle.

With the buckle configured as described above, at least a part of the harness may be arranged near the center of the cover member in the front-to-back direction of the vehicle.

With the buckle configured as described above, detection members may be provided on one or both sides inside the cover member in the front-to-back direction of the vehicle and the harness may be composed of a plurality of wires that branch towards each of the detection members.

A seat belt device according to another aspect of the present invention includes the buckle described above.

### EFFECT OF THE INVENTION

Therefore, an object of the present invention is to provide a buckle having a structure that can simplify the work of assembling the harness and improve the durability of the harness when the buckle swivels, and a seat belt device equipped with the same.

### BRIEF DESCRIPTION OF THE DRAWINGS

FIG. 1A is a diagram as viewed from the left side of a seat depicting an outline of a buckle and a bracket of a seatbelt device according to an embodiment of the present invention.
FIG. 1B is a diagram as viewed from the left side of the seat equipped with a buckle and a bracket.
FIG. 2A is a diagram as viewed from the front of the seat of the buckle and the bracket depicted in FIG. 1A.
FIG. 2B is a diagram as viewed from the front of the seat equipped with a buckle and a bracket.
FIG. 3 is a perspective view depicting an example of the internal structure of a buckle.
FIG. 4 is a perspective view depicting an example of the internal structure of a buckle, as viewed from a different angle.
FIG. 5 is a diagram as viewed from the tip end side depicting an example of the internal structure of a buckle.

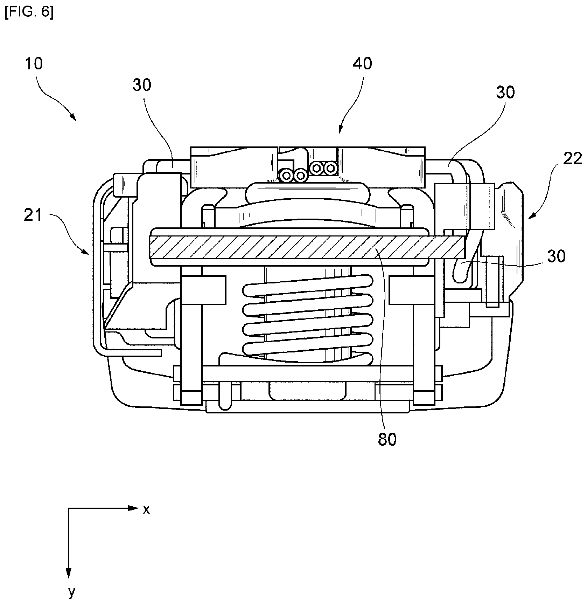

FIG. 6 is a diagram as viewed from the base end side depicting an example of the internal structure of a buckle.
FIG. 7 is a diagram as viewed from the front of the vehicle depicting an example of the internal structure of a buckle.
FIG. 8 is a diagram depicting the structure around a harness holder in a cross section perpendicular to the Y-axis.
FIG. 9 is a diagram as viewed from the back surface (the side opposite to the harness holder) of the frame part to which the harness holder is attached.
FIG. 10 is a diagram depicting the internal structure of a buckle in a cross section perpendicular to the X-axis.
FIG. 11 is a diagram depicting the structure around the harness holder inside the buckle.
FIG. 12 is a diagram depicting the buckle and the bracket before the harness is routed around the harness holder.
FIG. 13 is a diagram depicting the buckle and the bracket after the harness is routed around the harness holder.
FIG. 14 is a diagram depicting a state in which the buckle moves relative to the bracket in the vehicle front-to-back direction.

### DESCRIPTION OF THE PREFERRED EMBODIMENTS

Hereinafter, the configuration of the present invention will be described based on an example of an embodiment depicted in the drawings.

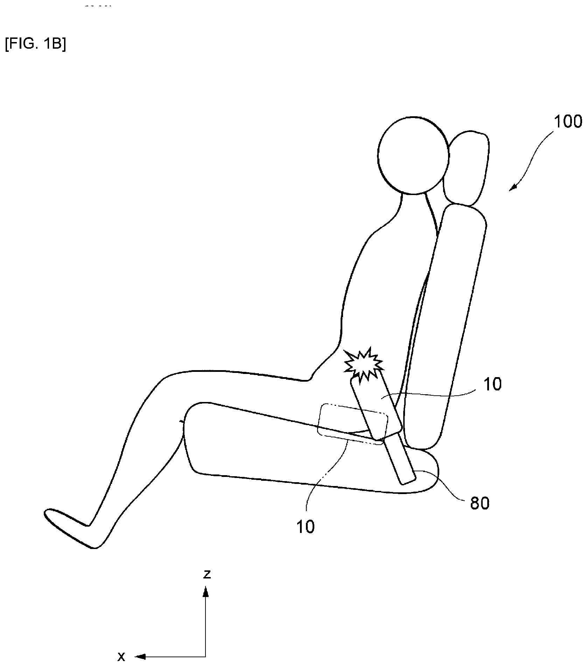

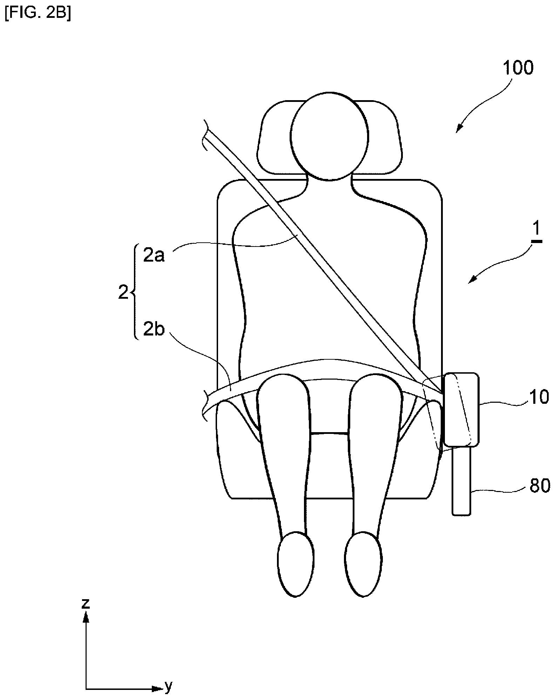

In this specification, up and down, left and right, and front and rear are defined as follows (see FIG. 1B and FIG. 2B). When an occupant is seated in a seat (vehicle seat 100) in a normal posture, the direction in which the occupant faces is referred to as forward, and the opposite direction is referred to as rearward, and when indicating the coordinate axes, the front-to-back direction is represented by the X-axis. Furthermore, when the occupant is seated in the vehicle seat 100 in a regular posture, the right of the occupant is referred to as a right direction, the left of the occupant is referred to as a left direction, and when indicating the coordinate axes, the left-to-right direction is represented by the Y-axis. Similarly, when the occupant is seated in a regular posture, a head direction of the occupant is referred to as up, a waist direction of the occupant is referred to as down, and when indicating the coordinate axes, the up-down direction is represented by the X-axis. The vehicle seat 100 may be a front seat (in other words, a driver's seat or a passenger seat) or a rear seat.

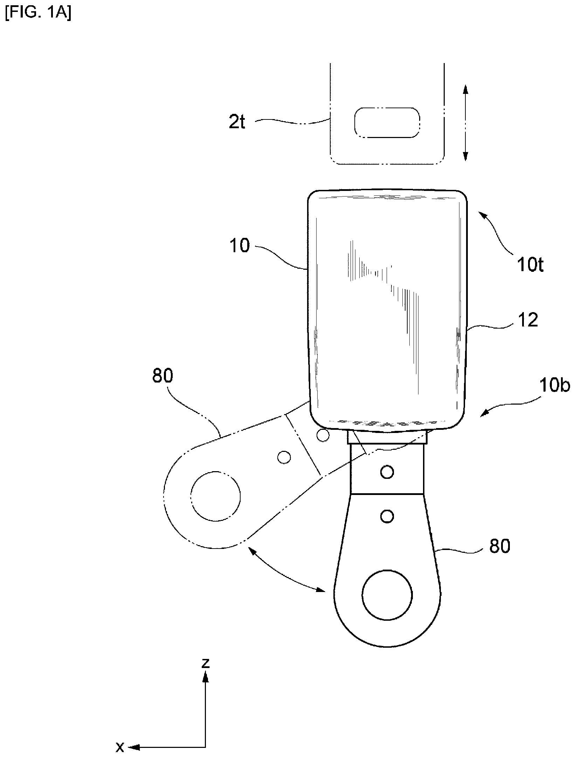

The vehicle seat belt device 1 has a seat belt 2 which is a webbing for restraining an occupant. The seat belt 2 has a shoulder belt 2a extending from an upper guide loop or upper anchor (not depicted) to a tongue 2t, and a lap belt 2b extending from the tongue 2t to a lap anchor (not depicted) (see FIG 1A to FIG. 2B). The shoulder belt 2a is stretched diagonally across the front of the chest of an occupant seated in the vehicle seat 100 from an upper part on one of the left and right sides to a lower part on the other left or right side. The lap belt 2b is stretched across the front of the occupant's waist from one side of the occupant to the other side of the occupant. The shoulder belt 2a and the lap belt 2b are formed in a continuous belt shape. The tongue 2t is inserted through the seat belt 2 and configured to be attachable to a buckle 10 (see FIG. 1A, and the like). When the tongue 2t is attached to the buckle 10, the seat belt device 1 achieves three-point restraint between the upper anchor, the tongue 2t (buckle 10), and the lap anchor.

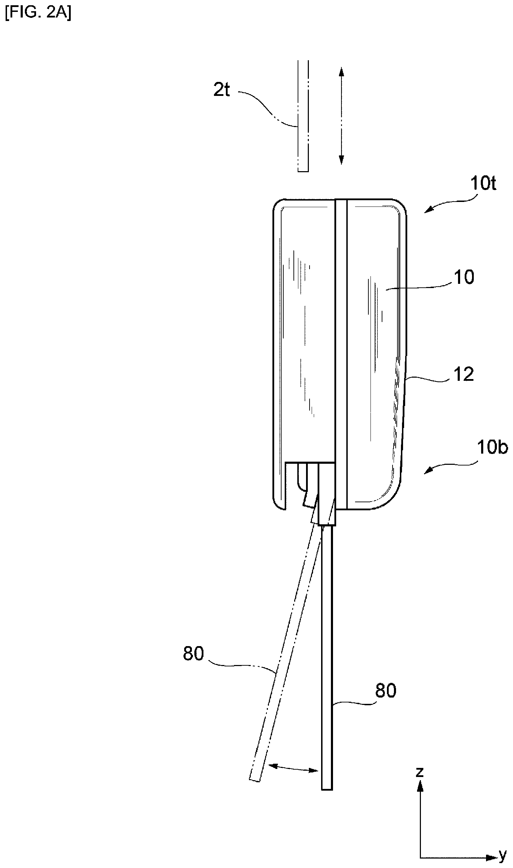

The seat belt device 1 of the present Embodiment is configured such that in the event of a vehicle emergency (a vehicle emergency refers to, but is not limited to, for example, a vehicle collision, an impact event occurring on the vehicle, or a vehicle overturning), the buckle 10 moves toward the front of the vehicle relative to a bracket (buckle stay) 80 (see FIG. 1A and FIG. 1B). Furthermore, the seat belt device 1 of the present Embodiment is configured so that in the event of a vehicle emergency, the buckle 10 moves in the vehicle width direction along the Y axis relative to the bracket 80 to move closer to the occupant and increase the restraining force (see FIG 2A and FIG. 2B). In order to enable this manner of changes in position (orientation) of the buckle 10, a base end part 10b of the buckle is attached to the bracket 80 so as to be movable relative thereto (see FIG. 1A and FIG. 2A).

### [Buckle configuration]

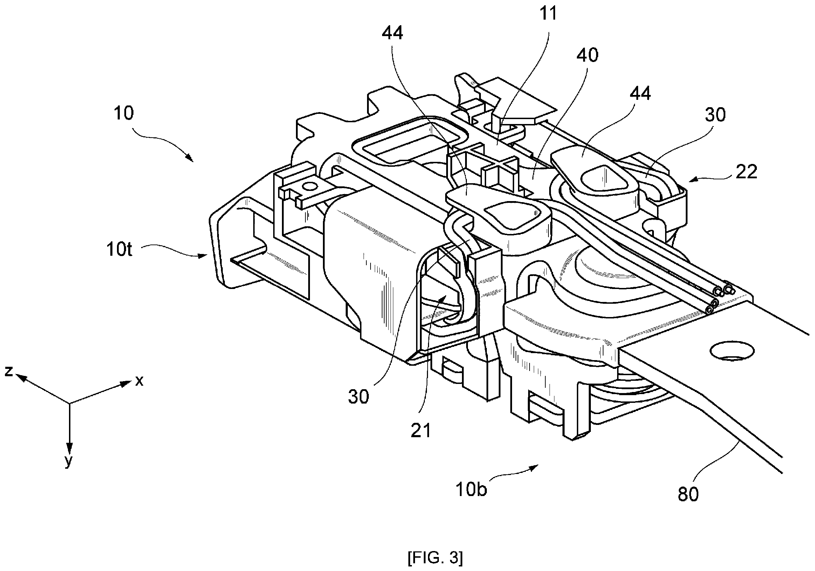

The configuration of the buckle 10 will be described below (see FIG. 3, and the like).

The buckle 10 in the seat belt device 1 of the present Embodiment includes a cover member 12, a detection member, a harness 30, a harness holder 40, a restraining part 50, a rotation preventing part 60, and the like.

The cover member 12 is a member that constitutes a housing that serves as a wall portion of the buckle 10 (see FIG. 1A and FIG. 2A). Although not shown in detail, the cover member 12 is attached and secured to a frame part 11 of the channel structure inside the buckle 10.

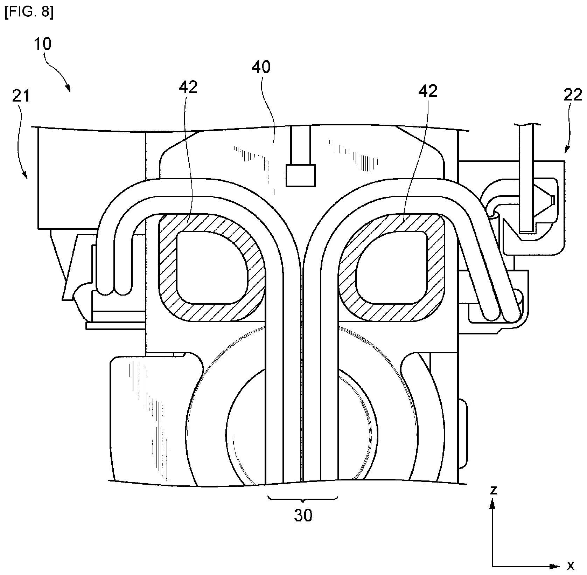

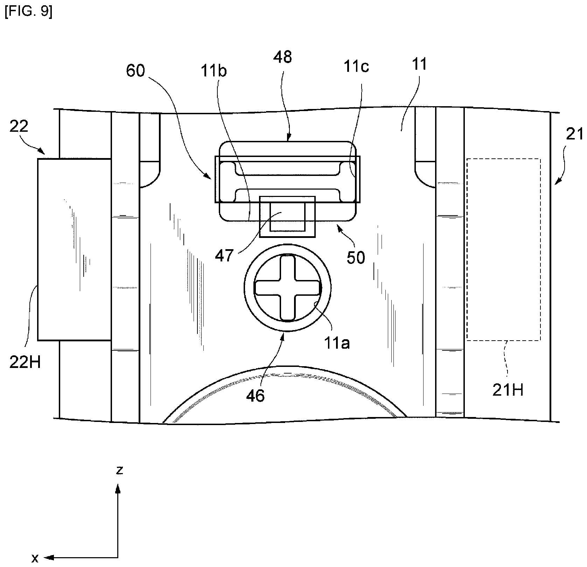

The detection member is arranged inside the cover member 12 and detects whether the buckle 10 is in a prescribed state. With the present Embodiment, a Hall Effect switch 21 and a slide switch 22 are provided as the detection members. The Hall Effect switch 21 is provided in a housing 21H (see FIG. 8, FIG. 9, and the like) for detecting the orientation (direction) of the buckle 10 when the buckle 10 moves in the event of a vehicle emergency as described above. The slide switch 22 is for detecting whether or not the tongue 2t is attached to the buckle 10, and is provided within a housing 22H (see FIG. 8, FIG. 9, and the like). The Hall Effect switch 21 and the slide switch 22 are arranged on either side of the vehicle in the front-to-back direction along the X-axis, and the harness 30 routed so as to branch toward each of the switches (see FIG. 8). In addition, there is also an aspect in which either the Hall Effect switch 21 or the slide switch 22 is provided on one side in the front-to-back direction of the vehicle along the X-axis, but an aspect in which the Hall Effect switch 21 and the slide switch 22 are arranged on both sides in the vehicle front-to-back direction will be described below.

The harness 30 is composed of wires that are wired so as to transmit signals detected by the detection members (the Hall Effect switch 21 and the slide switch 22) to the vehicle ECU (not depicted). As described above, the harness 30 of the present Embodiment is composed of a plurality of wires that branch off part way toward the Hall Effect switch 21 and the slide switch 22 (see FIG. 8). Up through branching along the harness holder 40, the harness 30 is arranged in the buckle 10 near the center of the width of the buckle along the front-to-back direction (X-axis direction) of the vehicle (see FIG. 8).

The harness holder 40 is a member configured to limit the range of movement of the harness 30 within the cover member 12 and to guide the harness 30 while providing sufficient play to allow at least a part of the harness 30 to move relative to the cover member 12 when the buckle 10 moves relative to the bracket 80. The harness holder 40 of the present Embodiment is configured as a member that is detachable from the frame part 11 in the buckle 10, in which a guide part 42 and a fall-out prevention part 44 are formed. In the present Embodiment, the harness holder 40 is made of resin and is integrally molded, but this is merely one example.

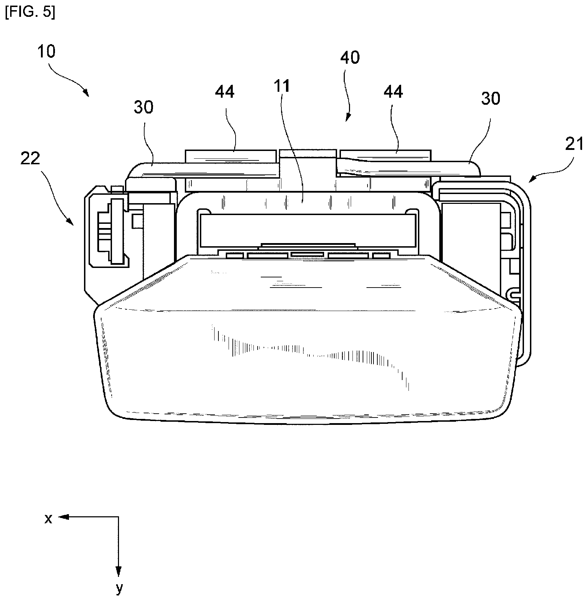

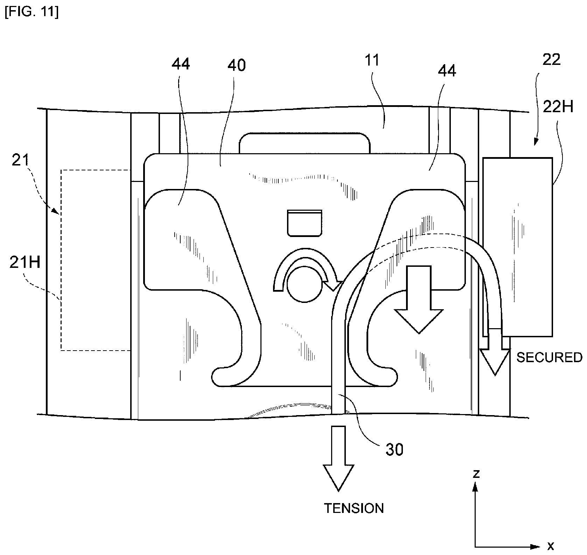

The guide part 42 is configured to guide the harness 30 from the base end part 10b to the tip end part 10t of the buckle 10 toward the Hall Effect switch 21 and the slide switch 22 along the way (see FIG. 8, and the like). With the present Embodiment, the guide part 42 is configured as a columnar portion formed so as to protrude from the main body portion of the harness holder 40 in the Y-axis direction. At least the portion of the surface (circumferential surface) of this manner of columnar portion that comes into contact with the harness 30 is configured as a curved surface such as a circumferential surface of a cylinder or a surface that includes a curved surface similar thereto (see Figure 8, and the like). The guide part 42 having this manner of smooth surface disperses the contact resistance even when tension acts so as to pull on the harness 30, making it easy to avoid stress concentration (see FIG. 11, and the like). In the present Embodiment, the guide part 42 is configured with a pair of columnar portions symmetrically arranged to guide the harness 30 toward the hall effect switch 21 and the slide switch 22, respectively (see FIG. 5, and the like). In addition, the guide part 42 is provided only in the portion of the path of the harness 30 from the bracket 80 to the detection members (the hall effect switch 21 and the slide switch 22) that guides the harness 30 toward these detection members, thereby reducing the space required to provide the guide part 42 (see FIG. 3, and the like).

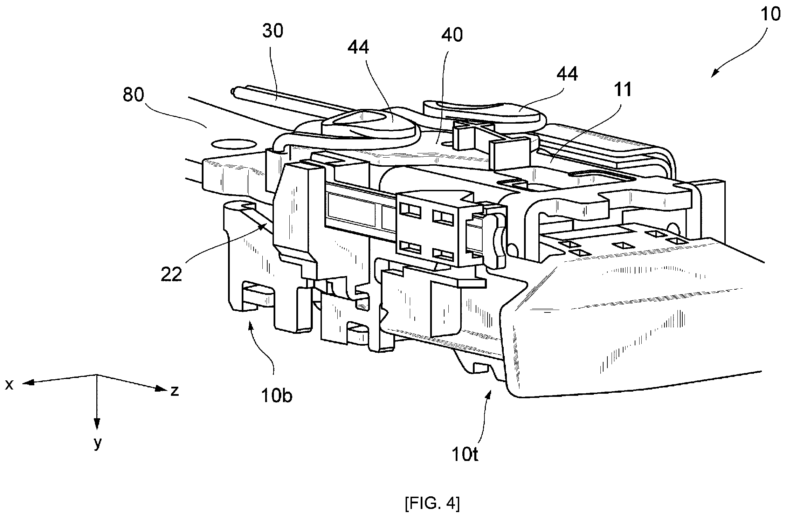

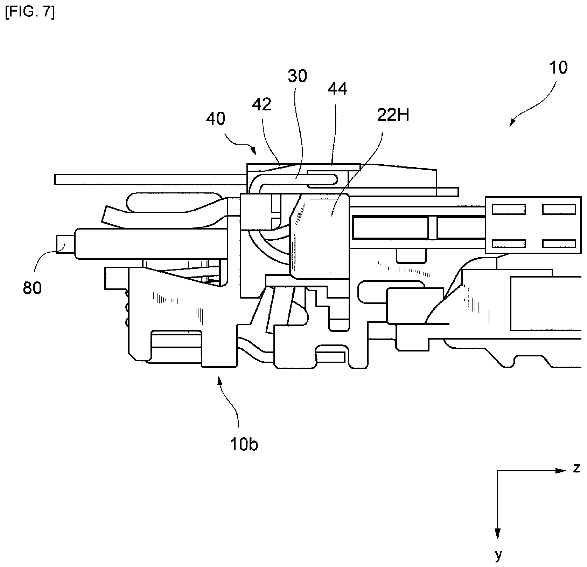

The fall-out prevention part 44 is provided to prevent the harness 30 from falling out of the guide part 42. In the present Embodiment, a brim-like or flange-like portion that protrudes toward the tip end part 10t of the buckle 10 is provided at the end part of the columnar portion that constitutes the guide part 42, and this portion functions as the fall-out prevention part 44 (see FIG. 4, FIG. 7, and the like). This manner of fall-out prevention part 44 is formed in a shape and size such that the harness 30 will not fall out from the guide part 42 even if the buckle 10 moves relative to the bracket 80 and the harness 30 is in a most bent state thereof.

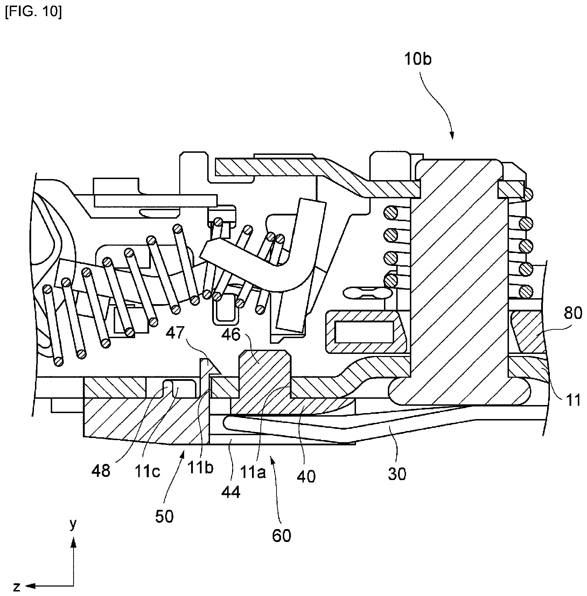

The restraining part 50 is provided to prevent the harness holder 40 from lifting up from the frame part 11 of the buckle 10. When tension acts so as to pull the harness 30, a force may also act on the harness holder 40, but even in such a case, the restraining part 50 prevents the harness holder 40 from lifting up from the frame part 11. The restraining part 50 can be configured, for example, by a snap fit, a rivet, or the like that secures the harness holder 40 to the frame part 11. In the present Embodiment, a harness holder 40 is adopted, which has a positioning pin 46 and a securing hook 47 on the side that becomes the mounting surface to the frame part 11, and by engaging the securing hook 47 with a hole 11b while being positioned with respect to a hole 11a of the frame part 11, these function as a restraining part 50 to suppress the harness holder 40 from lifting up (see FIG. 9 and FIG. 10).

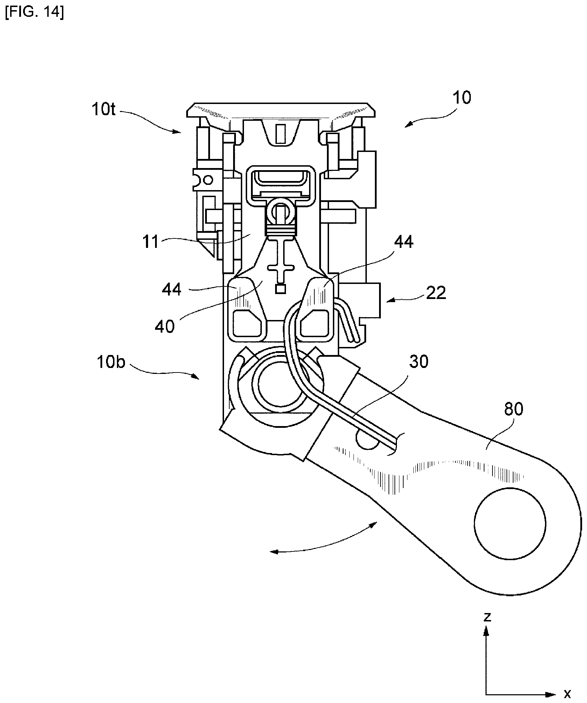

The rotation preventing part 60 is provided to prevent the harness holder 40 from rotating relative to the frame part 11 of the buckle 10 in the front-to-back direction (X-axis direction) of the vehicle. When tension is applied so as to pull on the harness 30, a force causing relative rotation may act on the harness holder 40 (see FIG. 11 and FIG. 14). However, even in such a case, the rotation preventing part 60 prevents rotation of the harness holder 40 relative to the frame part 11. In the present Embodiment, a harness holder 40 is adopted in which a rotation prevention rib 48 is provided on the side that becomes the mounting surface to the frame part 11, and by engaging the securing hook 47 with this rotation prevention rib 48 inserted into a hole 11c of the frame part 11, the positioning pin 46 and the rotation prevention rib 48 work together as the rotation preventing part 60 to prevent rotation of the harness holder 40 (see FIG. 9 and FIG. 10).

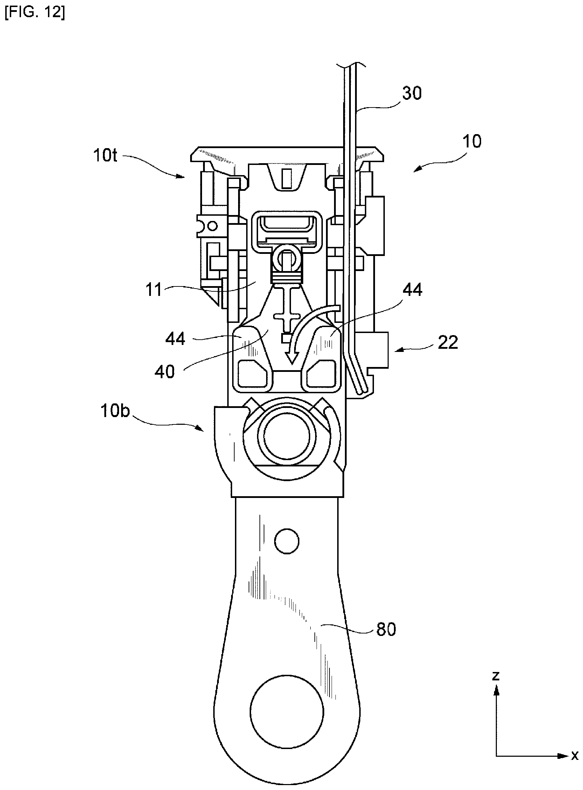

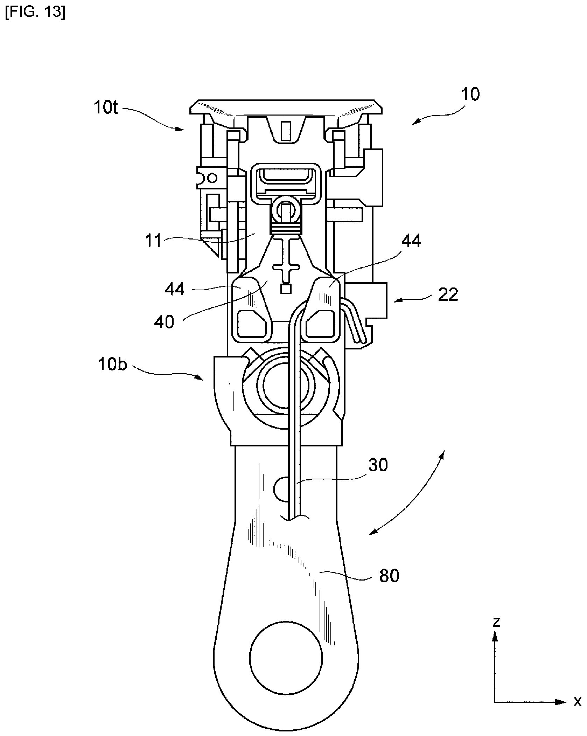

When wiring the harness 30 in the buckle 10 configured as described above, the harness 30, which is connected to a detection member (for example, the slide switch 22), only needs to be routed on the guide part 42 of the harness holder 40, be pulled toward the base end 10b, and secure a part of the harness 30 to the bracket 80 using a harness clip, a cable tie, or similar securing means (not depicted). This makes it possible to easily and in a single action route the harness 30 inside the buckle 10 (see FIG. 12 and FIG. 13). Moreover, even if the harness 30 is composed up of a plurality of wires, or even if the harness 30 is configured to branch out along the way toward detection members on both sides (for example, the hall effect switch 21 and the slide switch 22), basically, the harness 30 can easily be routed using a single action and using the same procedure. This manner of procedure achieved for the harness holder 40 is completely different from the conventional procedure of pinching one or more harnesses between ribs to secure them so that they do not move, and enables routing of the harness to be performed extremely simply and reliably. In addition, this harness holder 40 also limits the range of movement of the harness 30 within the cover member 12 by means of the guide part 42 and the fall-out prevention part 44, so that, for example, when assembling the cover member 12 after routing the harness 30, the risk of the harness 30 being caught in the wrong place can be minimized. In addition, with the buckle 10 configured as in the present Embodiment, unlike the conventional structure in which the harness is clamped between ribs for securing so as not to move, the harness holder 40 can guide the harness 30 while providing sufficient play for at least a part of the harness 30 to move gently within the cover member 12. Therefore, when the buckle 10 swivels, the harness 30 is prevented from being stretched and localized stress is prevented from occurring (movement of the harness 30 is absorbed as a whole), thereby improving durability of the harness 30.

Note that the embodiment described above is an example of a preferred implementation of the present invention but is not limited thereto, and various modified implementations are possible within a range that does not depart from a gist of the present invention.

### INDUSTRIAL APPLICABILITY

The present invention is suitably applied to a vehicle seat belt device in a vehicle seat in which a seat belt is integrated.

### EXPLANATION OF CODES

1. Seatbelt device
2. Seatbelt
2a. Shoulder belt
2b. Lap belt
2t. Tongue
10. Buckle
10b. Base end part of buckle
10t. Tip end part of buckle
11. Frame part
11a to 11c. Holes
12. Cover member
21. Hall Effect switch (detection member)
21H. Hall Effect switch housing
22. Slide switch (detection member)
22H. Slide switch housing
30. Harness
40. Harness holder
42. Guide part
44. Fall-out prevention part
46. Positioning pin
47. Securing hook
48. Rotation prevention rib
50. Restraining part
60. Rotation preventing part
80. Bracket
100. Vehicle seat

## Claims

1. A buckle with a base end part attached to a bracket constituting a seatbelt device for a vehicle so as to be movable relative thereto, comprising:
a cover member constituting a wall part of the buckle;
a detection member arranged inside the cover member for detecting whether or not the buckle is in a prescribed state;
a harness for sending the signal detected by the detection member to the vehicle side; and
a harness holder that limits the movable range of the harness in the cover member and guides the harness while providing sufficient play to allow at least a part of the harness to move relative to the cover member when the buckle moves relative to the bracket.

2. The buckle according to claim 1, wherein the harness holder includes a guide part on the harness partway from the base end part of the buckle toward a tip end part for guiding into the detection member.

3. The buckle according to claim 2, wherein in the path of the harness from the bracket to the detection member, the guide part is only provided on the portion that guides the harness into the detection member.

4. The buckle according to claim 2, wherein the guide part is composed of a cylindrical surface or an approximately equivalent curved surface.

5. The buckle according to claim 2, wherein the harness holder includes a fall-out prevention part for preventing the harness from falling out of the guide part.

6. The buckle according to claim 5, wherein the fall-out prevention part is formed with a shape and size sufficient to prevent the harness from falling out of the guide part when the harness is bent the most as a result of the buckle moving relative to the bracket.

7. The buckle according to claim 1, which is movable in the width direction of the vehicle relative to the bracket.

8. The buckle according to claim 7, further comprising a restraining part that restrains the harness holder, which is detachable from the buckle, from lifting up.

9. The buckle according to claim 1, which is movable in the front-to-back direction of the vehicle relative to the bracket.

10. The buckle according to claim 9, further comprising a rotation preventing part for preventing the harness holder that is detachable relative to the buckle from rotating relative to the buckle in the front-to-back direction of the vehicle.

11. The buckle according to claim 10, wherein at least a part of the harness is arranged near the center of the cover member in the front-to-back direction of the vehicle.

12. The buckle according to any one of claims 1 to 11, wherein detection members are provided on one or both sides inside the cover member in the front-to-back direction of the vehicle and the harness is composed of a plurality of wires that branch towards each of the detection members.

13. A seatbelt device provided with the buckle according to any one of claims 1 to 11.
